# EUROPEAN PATENT SPECIFICATION

(11) **EP 4 584 320 B1**
(45) Date of publication and mention of the grant of the patent: **28.10.2026**
(21) Application number: 23767842.0
(22) Date of filing: 05.09.2023
(51) Int. Cl.: C08J 5/18, D21H 17/00, C08L 5/04, D21H 17/06, D21H 17/26, D21H 17/30, D21H 19/24, D21H 19/34, D21H 27/10

(54) **SEAWEED AND CELLULOSE BASED FILM**
FILM AUF BASIS VON ALGEN UND ZELLULOSE
FILM À BASE D'ALGUES ET DE CELLULOSE

(30) Priority: 06.09.2022 EP 22382827
(43) Date of publication of application: 16.07.2025
(73) Proprietor: B'Zeos Switzerland SA, 1003 Lausanne (CH)
(72) Inventor: DORE, Camilla, 08001 Barcelona (ES); KYVIK, Adriana, 08035 Barcelona (ES); MAURICE, Guy, 0188 Oslo (NO)
(74) Representative: ABG Intellectual Property Law, S.L.
(86) International application number: PCT/EP2023/074261
(87) International publication number: WO 2024/052315

(56) References cited:
- ABDUL KHALIL H. P. S. ET AL: "Biodegradable polymer films from seaweed polysaccharides: A review on cellulose as a reinforcement material", EXPRESS POLYMER LETTERS, vol. 11, no. 4, 1 January 2017 (2017-01-01), pages 244 - 265, XP055846648, ISSN: 1788-618X, DOI: 10.3144/expresspolymlett.2017.26
- DATABASE WPI Week 2022006, Derwent World Patents Index; AN 2022-704044, XP002808630
- HAN YINGYING ET AL: "Sodium alginate/carboxymethyl cellulose films containing pyrogallic acid: physical and antibacterial properties : Sodium alginate/carboxymethyl cellulose films containing pyrogallic acid", vol. 97, no. 4, 1 March 2017 (2017-03-01), GB, pages 1295 - 1301, XP093022731, ISSN: 0022-5142, Retrieved from the Internet <URL:https://api.wiley.com/onlinelibrary/tdm/v1/articles/10.1002%2Fjsfa.7863> DOI: 10.1002/jsfa.7863
- JONGQI ZHANG ET AL.: "Preparation of the alginate/carrageenan/shellac films reinforced with cellulose nanocrystals obtained from enteromorpha for food packaging", INTERNATIONAL JOURNAL OF BIOLOGICAL MACROMOLECULES, no. 218, 25 July 2022 (2022-07-25), pages 519 - 532, XP002808631, DOI: 10.1016/j.ijbiomac.2022.07.145

## Description

### FIELD OF THE INVENTION

This invention related to the field of packaging materials, and in particular in seaweed and cellulose based films, their precursor compositions and methods for the preparation of said films.

### BACKGROUND OF THE INVENTION

Packaging in the food industry is crucial since it extends shelf life of food products and thus reduces food waste. It protects food items from being damaged by physical and other means and ensures food quality.

Nonetheless, the rise in consciousness in regard to plastic pollution, food safety, climate change, and reliance on petroleum based resources has driven special attention on how conventional petroleum based plastic is being used in the food packaging sector, among other sectors. Common challenges especially within the food sector are the challenge in having truly circular materials, which are fully recyclable (mechanically, organically or chemically), reliance on petroleum based polymers, and thus non-sustainable sources of biomass for packaging materials, and food safety concerns.

Multi-laminates have been identified as amongst the hardest packaging formats to recycle and small items or food contaminated plastic packaging is not economically feasible to recycle. Hence, packaging used for those applications are not circular and the end of life is normally incineration or the landfill.

Petroleum is a non-renewable resource, and most of the plastics currently used worldwide are processed from molecules derived from oil. With the tension in the international environment facing challenges related to climate change and a future looking more towards sustainable feedstock of materials, the use of sustainably sourced biomass for packaging applications is becoming rapidly a trend of development.

When it comes to food safety, during the processing of plastic food packaging materials, stabilizers, plasticizers, cross-linking agents, and lubricants are usually added to improve the material properties. The harmful components of plasticizers in food packaging plastics are mainly bisphenol A, phthalic acid esters, adipic acid diesters, alkyl phenols, etc. Most of them are environmental endocrine disruptors that can change the functions of the endocrine system. These harmful substances migrate from food packaging materials to packaged foods, thereby affecting human health.

Hence, to sum up, the development of a sustainable, bio-digestible, circular (100% bio-based), safe food packaging material to replace conventional plastic packaging in certain applications has become very necessary. Such films need to have suitable mechanical properties such as mechanical resistance and elasticity.

Seaweed presents a very attractive biomass source for the development of a new generation of materials which will replace the use of conventional petroleum-based packaging. Films from renewable sources, such as seaweed, have been disclosed in the art [Paixão et al., J. Appl. Polym. Sci., 2019, 136, 48263; Paula et al., Food Hydrocolloids, 2015, 47, 140-145; WO 03/061633 A1; and Khalil et al., eXPRESS Polymer Letters, 2017, 11(4), 244-265].

However, there remains a need for suitable biofilms which have good mechanical properties, suitable barrier properties, compatible with food and other packaged items and that can be manufactured at an industrial level.

### SUMMARY OF THE INVENTION

The inventors have surprisingly found that the suitable films for packaging may be obtained when combining specific ingredients present in seaweed, with specific cellulose derivatives and plasticizers, wherein the components of the film are present at some particular weight ratios. As shown in the examples, the films of the present invention have improved mechanical properties (such as low young modulus and high flexibility, high elongation at break and toughness) compared to other films. The films of the invention also have low moisture absorption, meeting the needs of actual use as protective packaging for food and other types of items. Also, as shown in the examples, in the absence of one or more of the components required for the films of the present invention or when all components are present but in a weight percentage or weight ratio outside the ranges defined in the present invention, the films are unsuitable for packaging applications or cannot even be obtained.

Thus, in the first aspect, the present invention relates to a film comprising:
- from 26 to 60 wt% of a mixture of alginate and carrageenan in a weight ratio of from 2:1 to 9:1,
- glycerol in a weight ratio to the alginate and carrageenan mixture from 1:2 to 2:1,
- microcrystalline cellulose in a weight ratio to the alginate and carrageenan mixture from 1:20 to 1:1,
- carboxymethyl cellulose in a weight ratio to the alginate and carrageenan mixture from 1:20 to 1:1,
- a divalent cation in a weight ratio to the alginate and carrageenan mixture from 1:200 to 1:8, and
- water,

wherein the weight ratio of carboxymethyl cellulose to microcrystalline cellulose is from 3:4 to 4:3 and
wherein the weight percentages are based on the total weight of the components of the film except water.

In the second aspect, the invention relates to a composition comprising:
- from 1.2 to 4.8 wt% of a mixture of alginate and carrageenan in a weight ratio of from 2:1 to 9:1,
- glycerol in a weight ratio to the alginate and carrageenan mixture from 1:2 to 2:1,
- microcrystalline cellulose in a weight ratio to the alginate and carrageenan mixture from 1:20 to 1:1,
- carboxymethyl cellulose in a weight ratio to the alginate and carrageenan mixture from 1:20 to 1:1, and
- water,

wherein the weight ratio of carboxymethyl cellulose to microcrystalline cellulose is from 3:4 to 4:3 and
wherein the weight percentages are based on the total weight of the composition.

This composition is used as precursor composition for the preparation of the films according to the first aspect of the invention.

The third aspect relates to a process for the manufacture of a film as defined in the first aspect, which comprises the following steps:
i) preparing a composition as defined in the second aspect;
ii) applying the composition of step i) to a surface to obtain a film, at a ratio of from 10 to 30 g of composition per 100 cm² of surface
iii) optionally drying the film obtained in step ii);
iv) crosslinking the film of step ii) or the film of step iii) by reaction with a divalent cation, preferably Ca²⁺; and
v) drying.

The fourth aspect relates to a film obtainable by the process according to the second aspect.

Finally, the fifth aspect relates to the use of the film according to the first aspect or the film according to the fourth aspect as a packaging.

### DESCRIPTION OF THE FIGURES

Figure 1 shows a Figure of Merit (FoM) for flexibility defined as tensile strength (MPa) divided by the young modulus (MPa) of comparative examples (References 1-3) and an example according to the invention (Example 10).
Figure 2 shows results of elongation at break (ε) and young modulus of comparative examples (References 1-3) and an example according to the invention (Example 10).
Figure 3 shows results of tensile strength (TS) values and toughness values of comparative examples (References 1-3) and an example according to the invention (Example 10).

### DETAILED DESCRIPTION OF THE INVENTION

### Films of the invention

The first aspect relates to a film comprising:
- from 26 to 60 wt% of a mixture of alginate and carrageenan in a weight ratio of from 2:1 to 9:1,
- glycerol in a weight ratio to the alginate and carrageenan mixture from 1:2 to 2:1,
- microcrystalline cellulose in a weight ratio to the alginate and carrageenan mixture of alginate from 1:20 to 1:1,
- carboxymethyl cellulose in a weight ratio to the alginate and carrageenan mixture from 1:20 to 1:1,
- a divalent cation in a weight ratio to the alginate and carrageenan mixture from 1:100 to 1:6, and
- water
wherein the weight ratio of carboxymethyl cellulose to microcrystalline cellulose is from 3:4 to 4:3 and wherein the weight percentage is based on the total weight of the components of the film except water.

The term "film" as used herein, refers to a material having a thickness of from 20 to 200 µm, preferably from 50 to 150 µm, more preferably from 80 to 120 µm. That means that the film is a 3-dimensional material wherein one of the dimensions has a size of from 20 to 200 µm, preferably from 50 to 150 µm, more preferably from 80 to 120 µm, and the other two dimensions are larger than the previous one. Preferably, each of the other two dimensions of the material have a size of more than 1 mm. The films of the invention can be provided as standalone films or can be provided as a layer on a surface and between surfaces (multilaminates).

Alginate is a naturally occurring polysaccharide present in brown algae, also known as seaweeds. The term "alginate" as used herein refers to a linear molecule consisting of (1→4)-linked β-D-mannuronic acid (M) and α-L-guluronic acid (G) residues wherein the carboxylic acids are in ionized form as carboxylates because the carboxyl group in the uronic acids is fully dissociated and thus negatively charged at physiological pH, since the carboxyl groups of mannuronic acid have a pKa of 3.38 and in guluronic acid a pKa of 3.65.

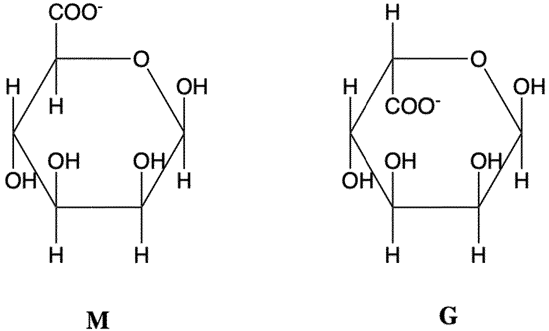

The M and G monomers in alginate may appear as homopolymeric blocks of consecutive G residues (i.e."G-blocks"), homopolymeric blocks of consecutive G residues (i.e "M-blocks"), or alternating blocks of M and G-residues (i.e. "MG-blocks").

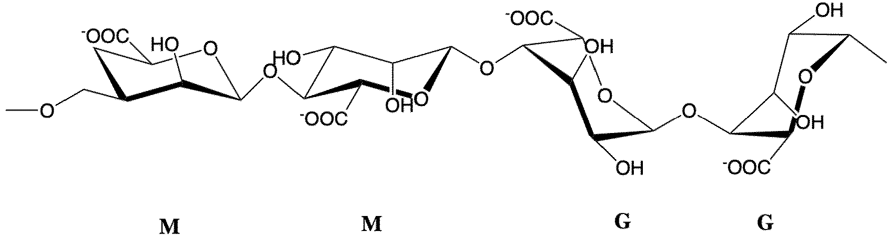

In a particular embodiment, the alginate present in the films and compositions of the invention has a M/G weight ratio from 0.3 to 0.7, preferably from 0.4 to 0.6, more preferably about 0.5. In another particular embodiment, the mean molecular weight of the alginate present in the films and compositions of the invention is from 150 to 500 kDa, preferably from 250 to 350 kDa, more preferably about 300 kDa. In another embodiment, the alginate present in the films and compositions of the invention has a M/G weight ratio of from 0.3 to 0.7 and an mean molecular weight from 150 to 500 kDa. In another particular embodiment, the alginate present in the films and compositions of the invention has a M/G weight ratio of from 0.4 to 0.6 and an mean molecular weight from 250 to 350 kDa.

Carrageenan is a naturally occurring polysaccharide present in red algae, also known as seaweeds. The term "carrageenan" as used herein refers to a sulfated linear polymer formed by alternate units of D-galactose and/or 3,6-anhydro-galactose (3,6-AG) joined by α-(1→3) and β-(1→4) glycosidic linkage. The sulfate content of carrageenan is generally from 15 to 40 wt%, with respect to the total weight of carrageenan, preferably from 20 to 35 wt%. Carrageenan is classified into various types, such as κ, 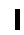 , α, β, γ, δ, θ, λ, µ, and v depending *inter alia* on the sulfate content.

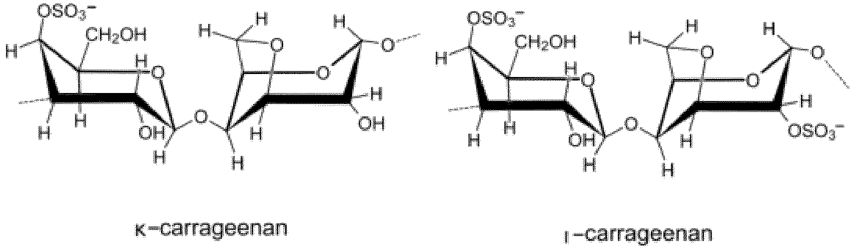

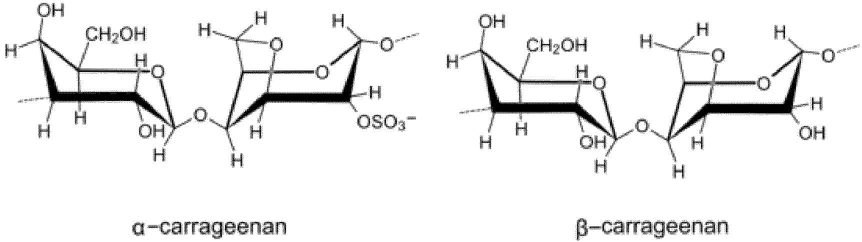

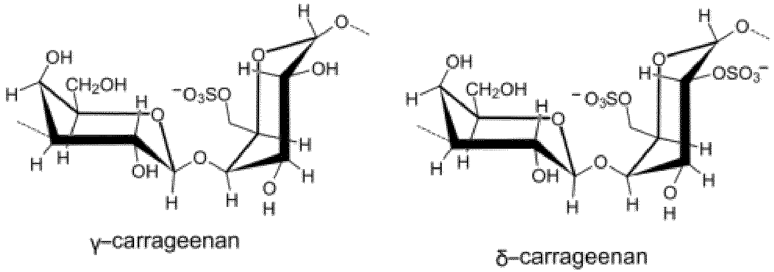

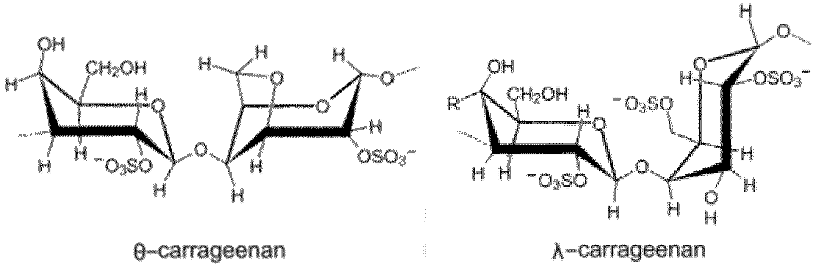

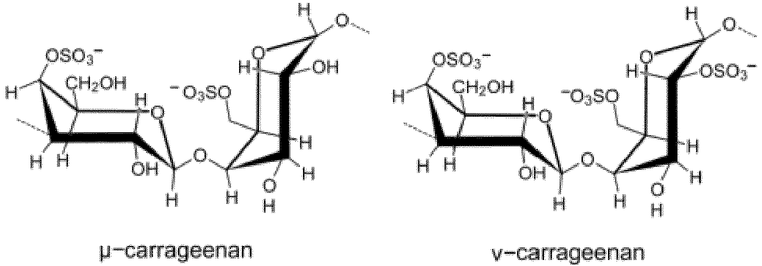

In a particular embodiment, the carrageenan present in the films and compositions of the invention comprises from 30 to 70 mol% of galactose units, preferably from 40 to 60 mol%, more preferably from 45 to 55 mol%, wherein the mol% is with respect to the carrageenan molecule. In a particular embodiment, the carrageenan present in the films and compositions of the invention comprises from 30 to 70 mol% of 3,6-anhydrogalactose units, preferably from 40 to 60 mol%, more preferably from 45 to 55 mol%, wherein the mol% is with respect to the carrageenan molecule. In a more preferred embodiment, the carrageenan present in the films and compositions of the invention comprises from 30 to 70 mol% of galactose units and from 70 to 30 mol% of 3,6-anhydrogalactose units, preferably from 40 to 60 mol% of galactose units and from 60 to 40 mol% of 3,6-anydrogalactose units, more preferably from 45 to 55 mol% of galactose units and from 55 to 45 mol% of 3,6-anhydrogalactose units, wherein the mol% is with respect to the carrageenan molecule. In particular, the carrageenan present in the films and compositions of the invention has a mean molecular weight of from 150 to 600 kDa, preferably from 250 to 500 kDa, more preferably from 300 to 400 kDa.

The content of the mixture of alginate and carrageenan in the films of the invention is from 26 to 60 wt% with respect to the total weight of the components of the film except water, preferably from 30 to 56 wt%, more preferably from 34 to 52 wt%, more preferably from 36 to 48 wt%, more preferably from 36 to 44 wt%, still more preferably from 38 to 42 wt%.

In a preferred embodiment of the present invention, the carrageenan is selected from the group consisting of κ-carrageenan, 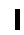 -carrageenan and mixtures thereof; preferably a mixture of κ-carrageenan and 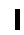 -carrageenan. In a preferred embodiment, the carrageenan comprises a mixture of κ-carrageenan and 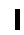 -carrageenan in a weight ratio from 1:1 to 1:5, preferably from 1:1.5 to 1:4.5, more preferably from 1:2 to 1:4, still more preferably from 1:2.5 to 1:3.5, even more preferably from 1:2.7 to 1:3.3, the most preferred about 1:3. In a more preferred embodiment, the carrageenan is a mixture of κ-carrageenan and 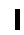 -carrageenan in a weight ratio from 1:1 to 1:5, preferably from 1:1.5 to 1:4.5, more preferably from 1:2 to 1:4, still more preferably from 1:2.5 to 1:3.5, even more preferably from 1:2.7 to 1:3.3, the most preferred about 1:3.

The films and compositions of the invention comprise a mixture of alginate and carrageenan in a weight ratio of from 2:1 to 9:1, preferably from 2:1 to 8:1, more preferably from 2.5:1 to 7:1, more preferably from 3:1 to 6:1, more preferably from 3.5:1 to 5:1, more preferably from 3.5:1 to 4.5:1, the most preferred about 4:1.

The films of the invention also contain glycerol, which is a widely known plasticizer. In the films and compositions of the invention, the weight ratio of glycerol to the alginate and carrageenan mixture is from 0.5:1 to 2:1, preferably from 0.7:1 to 1.8:1, more preferably from 1:1 to 1.4:1, more preferably from 1.1:1 to 1.3:1, still more preferably from 1.15:1 to 1.25:1.

Preferably, the amount of glycerol in the films of the invention is from 16 to 63 wt% with respect to the total weight of the components of the film except water, preferably from 20 to 60 wt%, more preferably from 25 to 55 wt%, more preferably from 30 to 55 wt%, more preferably from 35 to 55 wt%, more preferably from 40 to 55 wt%, more preferably from 45 to 50 wt%.

The films of the invention also contain microcrystalline cellulose (MCC), which is a naturally occurring polymer widely known in the fields of food and pharmaceuticals. As used herein, the term "microcrystalline cellulose" or "MCC" refers to a cellulose polymer, i.e. composed of glucose units connected by a β(1→4) glycosidic bond, having a high crystallinity, preferably of at least 80%. The crystallinity of MCC can be determined using any suitable technique known in the art, such as those described by Queiroz et al. [Cellulose, 2021, 28, 8971-8985]. It is generally obtained from native cellulose material or pulp by strong acid hydrolysis.

In a particular embodiment, the microcrystalline cellulose present in the films and compositions of the invention comprise a particle size from 5 to 50 µm, preferably from 10 to 30 µm, more preferably from 18 to 22 µm, still more preferably about 20 µm. The particle size refers to the mean diameter, i.e. the summation of diameters of the analyzed particles among the number of analyzed particles, wherein the diameter is the largest dimension of each particle. Particle size can be determined by common procedures in the art such as by laser diffraction. In another particular embodiment, the mean molecular weight of the microcrystalline cellulose present in the films and compositions of the invention is from 150 to 500 Da, preferably from 160 to 400 Da.

In the films and compositions of the invention, the weight ratio of microcrystalline cellulose to the alginate and carrageenan mixture is from 1:20 to 1:1, preferably from 1:18 to 1:2, more preferably from 1:17 to 1:3, more preferably from 1:15 to 1:5, more preferably from 1:12 to 1:8, the most preferred about 1:10.

Preferably, the amount of microcrystalline cellulose in the films of the invention is from 1.5 to 28.5 wt% with respect to the total weight of the components of the film except water, preferably from 1.5 to 25 wt%, more preferably from 1.5 to 20 wt%, more preferably from 1.5 to 15 wt%, more preferably from 2 to 15 wt%, more preferably from 2 to 10 wt%, more preferably from 2 to 6 wt%.

The films of the invention also contain carboxymethyl cellulose (CMC), which is widely known in the field of pharmaceuticals. It is an etherified ether of cellulose containing carboxymethyl groups (-CH₂-COOH) bound to one or more of the hydroxyl groups of the glucopyranose monomers that make up the cellulose backbone (cellulose is a polysaccharide of a linear chain of β(1→4) linked D-glucose units). Preferably, the carboxymethyl cellulose in the films and compositions of the invention is in the form of the sodium salt.

In a particular embodiment, the carboxymethyl cellulose present in the films and compositions of the invention is in the form of sodium salt and comprises a medium viscosity from 0.4 to 0.8 Pa.s (400 to 800 cps) measured in 2%wt solution in H₂O at 25 °C. In another particular embodiment, the carboxymethyl cellulose present in the films and compositions of the invention has a degree of substitution from 0.65 to 0.90 carboxymethyl group per each anhydroglucose unit. In another particular embodiment, the carboxymethyl cellulose present in the films and compositions of the invention has a mean molecular weight of 90 to 500 kDa, preferably of 200 to 300 kDa. In another particular embodiment, the carboxymethyl cellulose present in the films and compositions of the invention is in the form of sodium salt and comprises a medium viscosity from 0.4 to 0.8 Pa.s (400 to 800 cps) measured in 2%wt solution in H₂O at 25 °C, has a degree of substitution from 0.65 to 0.90 carboxymethyl group per each anhydroglucose unit, and a mean molecular weight of from 90 to 500 kDa, preferably of 200 to 300 kDa.

In the films and compositions of the invention, the weight ratio of carboxymethyl cellulose to the alginate and carrageenan mixture is from 1:20 to 1:1, preferably from 1:18 to 1:2, more preferably from 1:17 to 1:3, more preferably from 1:15 to 1:5, more preferably from 1:12 to 1:8, the most preferred about 1:10.

Preferably, the amount of carboxymethyl cellulose in the films of the invention is from 1.5 to 28.5 wt% with respect to the total the total weight of the components of the film except water, preferably from 1.5 to 25 wt%, more preferably from 1.5 to 20 wt%, more preferably from 1.5 to 15 wt%, more preferably from 2 to 15 wt%, more preferably from 2 to 10 wt%, more preferably from 2 to 6 wt%.

In the films and compositions of the invention, the weight ratio of carboxymethyl cellulose to microcrystalline cellulose is from 3:4 to 4:3, preferably about 1:1.

Another component of the films of the invention is a divalent cation, such as a Ca²⁺, Mg²⁺, Zn²⁺ cation, preferably a Ca²⁺ cation. The divalent cation acts as a crosslinking agent. The source of the divalent cation can be any suitable salt of said divalent cation, such as a chloride salt. Preferably, the source of divalent cation is CaCl₂.

In the films of the invention, the weight ratio of divalent cation to the alginate and carrageenan mixture is from 1:200 to 1:8, preferably from 1:100 to 1:10, more preferably from 1:50 to 1:20, more preferably from 1:25 to 1:20.

The amount of divalent cation, preferably Ca²⁺, in the films of the invention is from 0.2 to 5 wt% with respect to the weight of the components of the film except water, preferably from 1 to 3 wt%, more preferably from 1.5 to 2 wt%, more preferably from 1.6 to 1.8 wt%. In a preferred embodiment, the films of the invention further comprise triacetin, which also acts as a plasticizer together with glycerol.

In the films and compositions of the invention, the weight ratio of triacetin to the alginate and carrageenan mixture is from 1:200 to 1:8, preferably from 1:100 to 1:10, more preferably from 1:20 to 1:10, more preferably from 1:18 to 1:12

The amount of triacetin in the films of the invention is from 0.2 to 5 wt% with respect to the total weight of the components of the film except water, preferably from 1 to 4 wt%, more preferably from 2 to 3 wt%, more preferably from 2.4 to 2.6 wt%.

In a preferred embodiment, the film of the invention comprises:
- from 30 to 56 wt% alginate with respect to the total weight of the components of the film except water,
- from 1.5 to 3 wt% κ-carrageenan and from 4 to 9 wt% 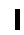 -carrageenan with respect to the total weight of the components of the film except water,
- from 20 to 60 wt% glycerol with respect to the total weight of the components of the film except water,
- from 1.5 to 25 wt% microcrystalline cellulose with respect to the total weight of the components of the film except water,
- from 1.5 to 25 wt% carboxymethyl cellulose with respect to the total weight of the components of the film except water,
- from 0.5% to 3% Ca²⁺ with respect to the total weight of the components of the film except water,
- from 1 to 4 wt% triacetin with respect to the total weight of the components of the film except water, and
from 10 to 40% water with respect to the total weight of the film..

In a more preferred embodiment, the film of the invention comprises:
- from 35 to 45 wt% alginate with respect to the total weight of the components of the film except water,
- from 1.8 to 2.5 wt% κ-carrageenan and from 5 to 7 wt% 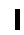 -carrageenan with respect to the total weight of the components of the film except water,
- from 40 to 55 wt% glycerol with respect to the total weight of the components of the film except water,
- from 2 to 6 wt% microcrystalline cellulose with respect to the total weight of the components of the film except water,
- from 2 to 6 wt% carboxymethyl cellulose with respect to the total weight of the components of the film except water,
- from 1.5 to 2 wt% Ca²⁺ with respect to the total weight of the components of the film except water,
- from 2 to 3 wt% triacetin with respect to the total weight of the components of the film except water, and
from 20 to 30% water with respect to the total weight of the film.

In said films, the weight ratios of the components are as previously defined.

In a preferred embodiment, the film of the invention comprises:
- from 26 to 60 wt% of a mixture of alginate and carrageenan in a weight ratio of from 3:1 to 6:1,
- glycerol in a weight ratio to the alginate and carrageenan mixture from 1:1 to 1.5:1,
- microcrystalline cellulose in a weight ratio to the alginate and carrageenan mixture of alginate from 1:15 to 1:5,
- carboxymethyl cellulose in a weight ratio to the alginate and carrageenan mixture from 1:15 to 1:5,
- a divalent cation in a weight ratio to the alginate and carrageenan mixture from 1:50 to 1:20, and
- water

wherein the weight ratio of carboxymethyl cellulose to microcrystalline cellulose is from 3:4 to 4:3 and
wherein the weight percentage is based on the total weight of the components of the film except water.

In a preferred embodiment, the film of the invention comprises
- from 30 to 56 wt% of a mixture of alginate and carrageenan in a weight ratio of from 3.5:1 to 4.5:1,
- glycerol in a weight ratio to the alginate and carrageenan mixture from 1.1:1 to 1.3:1,
- microcrystalline cellulose in a weight ratio to the alginate and carrageenan mixture of alginate from 1:12 to 1:8,
- carboxymethyl cellulose in a weight ratio to the alginate and carrageenan mixture from 1:12 to 1:8,
- a divalent cation in a weight ratio to the alginate and carrageenan mixture from 1:25 to 1:20, and
- water

wherein the weight ratio of carboxymethyl cellulose to microcrystalline cellulose is from 3:4 to 4:3 and
wherein the weight percentage is based on the total weight of the components of the film except water.

The films and compositions of the invention may comprise additional ingredients, such as one or more of: montmorillonite (nanoclay), calcium carbonate, glucono delta-lactone (GDL), nanofibrillated cellulose, tween, graphene, graphene oxide, polylactic acid, starch, polyhydroxyalkanoates (PHA) such as polyhydroxybutyrate (PHB), polyvinyl alcohol (PVOH), polylactic acid (PLA), xanthan gum, agar agar, pectin, chitosan, chitin, mannitol, sorbitol, xylitol, natural wax, camphor and gelatin.

The films of the invention may also contain water. The water present in the films of the invention corresponds to adsorbed water from the humidity in the environment where the films are stored. Usually, the water content of the films of the invention immediately after they have been manufactured is less than 5 wt%. Usually, the water content of the film gradually increases upon storage. The amount of water in the films of the invention is typically up to 50 wt% with respect to the total weight of the film, preferably up to 40 wt%, more preferably up to 30 wt%. Preferably, the water content in the films of the invention is from 5 to 50 wt% with respect to the total weight of the film, preferably from 10 to 40 wt%, more preferably from 10 to 30 wt%, still more preferably from 20 to 30 wt%. The water content of the film depends on the relative humidity (RH) of the environment where the film is stored. The water content of the film may be determined by weighting the film before and after a drying step of at least 2 hours, preferably 6 hours at a temperature between 45 and 65°C, preferably 55°C. The difference in weight of the film before and after the drying step is attributed to water.

In the films of the invention described herein, the weight percentage (wt%) of the components is expressed on a dry basis, i.e. with respect to the total weight of all components of the film except water; whereas the water weight percentage (wt%) is expressed with respect to the total weight of the film, i.e. the sum of the weight of all components of the film including water.

The films of the invention are flexible. The term "flexible" means that the film can be manipulated, bended, folded and twisted crumpled without breaking and it can be stretched reversibly when it undergoes elastic strain. For a given thickness of a material the ratio between tensile strength (in MPa) and young modulus (in MPa) (TS/Y) can serve as a figure of merit (FOM) for flexibility. In particular the term "flexible" for the films of the invention, with thickness ranging between 50 and 150 µm, preferably between 80 and 120 µm means that the parameter TS/Y is at least 0.1, preferably above 0.12, more preferably above 0.14.The tensile strength and Young modulus can be determined following the procedure described in the examples.

Another advantage of the films of the inventions is that they are bio-based (as they have been obtained from seaweed and cellulose sources). Thus, they can be used in packaging applications as a sustainable alternative to conventional plastic packaging.

Another advantage of the films of the inventions is that they are home compostable.

Finally, another advantage of the films of the invention is that they are edible, since all components are classified or approved as food ingredients.

### Compositions of the invention

In the second aspect, the invention relates to a composition which is used as a precursor composition for the preparation of the films of the invention.

The composition of the second aspect of the invention comprises:
- from 1.2 to 4.8 wt% of a mixture of alginate and carrageenan in a weight ratio of from 2:1 to 9:1,
- glycerol in a weight ratio to the alginate and carrageenan mixture from 1:2 to 2:1,
- microcrystalline cellulose in a weight ratio to the alginate and carrageenan mixture from 1:20 to 1:1,
- carboxymethyl cellulose in a weight ratio to the alginate and carrageenan mixture from 1:20 to 1:1, and
- water,
wherein the weight ratio of carboxymethyl cellulose to microcrystalline cellulose is from 3:4 to 4:3, and wherein the weight percentage is based on the total weight of the composition.

Alginate and carrageenan are as previously defined.

The content of the mixture of alginate and carrageenan in the compositions of the invention is from 1.2 to 4.8 wt% with respect to the total weight of the composition, preferably from 1.5 to 3.5 wt%, more preferably from 1.5 to 3 wt%, more preferably from 1.5 to 2.5 wt%, more preferably from 1.75 to 2.25 wt%, still more preferably from 1.9 to 2.1 wt%.

In a preferred embodiment of the present invention, the carrageenan is selected from the group consisting of κ-carrageenan, 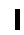 -carrageenan and mixtures thereof; preferably a mixture of κ-carrageenan and 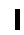 -carrageenan. In a preferred embodiment, the carrageenan comprises a mixture of κ-carrageenan and 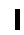 -carrageenan in a weight ratio from 1:1 to 1:5, preferably from 1:1.5 to 1:4.5, more preferably from 1:2 to 1:4, still more preferably from 1:2.5 to 1:3.5, even more preferably from 1:2.7 to 1:3.3, the most preferred about 1:3. In a more preferred embodiment, the carrageenan is a mixture of κ-carrageenan and 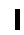 -carrageenan in a weight ratio from 1:1 to 1:5, preferably from 1:1.5 to 1:4.5, more preferably from 1:2 to 1:4, still more preferably from 1:2.5 to 1:3.5, even more preferably from 1:2.7 to 1:3.3, the most preferred about 1:3.

The films and compositions of the invention comprise a mixture of alginate and carrageenan in a weight ratio of from 2:1 to 9:1, preferably from 2:1 to 8:1, more preferably from 2.5:1 to 7:1, more preferably from 3:1 to 6:1, more preferably from 3.5:1 to 5:1, more preferably from 3.5:1 to 4.5:1, the most preferred about 4:1.

The compositions of the invention also contain glycerol, which is a widely known plasticizer. Glycerol is present in the films and compositions of the invention in a weight ratio to the alginate and carrageenan mixture from 1:2 to 2:1, preferably from 0.7:1 to 1.8:1, more preferably from 1:1 to 1.4:1, more preferably from 1.1:1 to 1.3:1, more preferably from 1.15:1 to 1.25:1.

Preferably, the amount of glycerol in the compositions of the invention is from 1 to 4 wt% with respect to the total weight of the composition, preferably from 1.2 to 3.8 wt%, more preferably from 1.5 to 3.5 wt%, more preferably from 1.8 to 3.2 wt%, more preferably from 2 to 3 wt%, more preferably from 2.2 to 2.7 wt%.

The compositions of the invention also contain microcrystalline cellulose (MCC), which is as previously defined.

In the films and compositions of the invention, the weight ratio of microcrystalline cellulose to the alginate and carrageenan mixture is from 1:20 to 1:1, preferably from 1:18 to 1:2, more preferably from 1:17 to 1:3, more preferably from 1:15 to 1:5, more preferably from 1:12 to 1:8, the most preferred about 1:10.

Preferably, the amount of microcrystalline cellulose in the compositions of the invention is from 0.1 to 2 wt% with respect to the total weight of the composition, preferably from 0.1 to 1.5 wt%, more preferably from 0.1 to 1 wt%, more preferably from 0.1 to 0.5 wt%, more preferably from 0.1 to 0.3 wt%, more preferably from 0.15 to 0.25 wt%.

The compositions of the invention also contain carboxymethyl cellulose (CMC), which is as previously defined.

In the films and compositions of the invention, the weight ratio of carboxymethyl cellulose to the alginate and carrageenan mixture is from 1:20 to 1:1, preferably from 1:18 to 1:2, more preferably from 1:17 to 1:3, more preferably from 1:15 to 1:5, more preferably from 1:12 to 1:8, the most preferred about 1:10.

Preferably, the amount of carboxymethyl cellulose in the compositions of the invention is from 0.1 to 2 wt% with respect to the total weight of the composition, preferably from 0.1 to 1.5 wt%, more preferably from 0.1 to 1 wt%, more preferably from 0.1 to 0.5 wt%, more preferably from 0.1 to 0.3 wt%, more preferably from 0.15 to 0.25 wt%.

In the compositions of the invention, the weight ratio of carboxymethyl cellulose to microcrystalline cellulose is from 3:4 to 4:3, preferably about 1:1.

The compositions of the invention further comprise water. Thus, the compositions of the invention are aqueous compositions.

Preferably, the amount of water in the compositions of the invention is at least 80 wt% with respect to the total weight of the composition, more preferably at least 85 wt%, more preferably at least 90 wt%.

In a preferred embodiment, the compositions of the invention further comprise triacetin, which also acts as a plasticizer together with glycerol.

In the films and compositions of the invention, the weight ratio of triacetin to the alginate and carrageenan mixture is from 1:200 to 1:8, preferably from 1:100 to 1:10, more preferably from 1:20 to 1:10, more preferably from 1:18 to 1:12.

Preferably, the amount of triacetin in the compositions of the invention is from 0.01 to 2.5 wt% with respect to the total weight of the composition, preferably from 0.05 to 2 wt%, more preferably from 0.05 to 1 wt%, more preferably from 0.01 to 0.5 wt%, more preferably from 0.05 to 0.2 wt%, more preferably from 0.1 to 0.2 wt%.

In a preferred embodiment, the composition of the invention comprises:
- from 1 to 2.5 wt% alginate,
- from 0.07 to 0.15 wt% κ-carrageenan and from 0.2 to 0.4 wt% 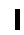 -carrageenan,
- from 1 to 4 wt% glycerol,
- from 0.1 to 1 wt% microcrystalline cellulose,
- from 0.1 to 1 wt% carboxymethyl cellulose,
- from 0.05 to 0.5 wt% triacetin, and
- water
wherein the weight percentages are based on the total weight of the composition.

In another preferred embodiment, the composition of the invention comprises:
- from 1.5 to 1.7 wt% alginate,
- from 0.09 to 0.11 wt% κ-carrageenan and from 0.25 to 0.35 wt% 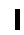 -carrageenan,
- from 2.1 to 2.5 wt% glycerol,
- from 0.1 to 0.3 wt% microcrystalline cellulose,
- from 0.1 to 0.3 wt% carboxymethyl cellulose,
- from 0.1 to 0.2 wt% triacetin, and
- water
wherein the weight percentages are based on the total weight of the composition.

In said compositions, the weight ratios of the components are as previously defined.

The compositions defined herein in the second aspect are used for the manufacture of the films of the invention.

### Process for manufacturing the films of the invention

The third aspect relates to a process for the manufacture of a film as defined in the first aspect, which comprises the following steps:
i) preparing a composition as defined in the second aspect;
ii) applying the composition of step i) to a surface to obtain a film, at a ratio of from 10 to 30 g of composition per 100 cm² of surface
iii) optionally drying the film obtained in step ii);
iv) crosslinking the film of step ii) or the film of step iii) by reaction with a divalent cation, preferably Ca²⁺; and
v) drying.

The first step of the process is the preparation of a composition as defined in the second aspect. This composition may be prepared by mixing the ingredients, preferably with stirring.

In a particular embodiment, step i) comprises mixing alginate and carrageenan with water, preferably, to fully homogenize this mixture of ingredients, it is heated at a temperature 35 to 50 °C preferably 40 to 45 °C. Microcrystalline cellulose and carboxymethyl cellulose are dispersed in water; preferably at 500 to 1000 rpm, more preferably at 800 to 1000 rpm; preferably for at least 5 minutes, more preferably from 5 to 20 min; preferably at a temperature of 20 to 25 °C. This dispersion of MCC and CMC is mixed with the alginate and carrageenan mixture. Preferably, to fully homogenize this mixture of ingredients, it is heated at a temperature of 35 to 50 °C, preferably at 40 to 45 °C; preferably for 10 to 30 min, more preferably for 10 to 20 min; preferably with stirring, more preferably with a drill mixer. The plasticizer (either glycerol or glycerol and triacetin) is added to the resulting mixture. Preferably the mixture is degassed.

The second step of the process, step ii) is applying the composition prepared in step i) to a surface at a ratio of from 10 to 30 g of composition per 100 cm² of surface, preferably at a ratio of from 15 to 25 g of composition per 100 cm².

Preferably, the thickness of the composition is homogeneous across the surface, i.e. the amount of composition per surface unit (g/cm²) at one point of the surface does not differ more than ±10% of said value at any other point of the surface. Preferably the surface does not present empty areas, imperfections or bubbles.

The surface is preferably a flat and smooth surface made of rigid glass, semi-rigid or flexible plastic such as polystyrene, methacrylate, polyvinyl chloride, or low density polyethylene.

The composition can be applied to the surface by pouring, spraying, optionally followed by a spreading step.

The next step of the process, step iii) is optional, and is the drying of the film obtained in step ii). This drying involves the removal of water, preferably so that the resulting film has a water content up to 50 wt% with respect to the total weight of the film, preferably up to 30 wt%, more preferably from 10 to 50 wt%, more preferably from 10 to 40 wt%, more preferably from 10 to 30 wt%, still more preferably from 20 to 30 wt%. The drying step may be carried out by subjecting the film to a temperature of 35 to 50 °C, preferably 35 to 45 °C, more preferably 38 to 42 °C, simultaneously applying an air flow preferably for 1 to 12 hours, preferably with an air flow from 1000 to 10000 m³/h per square meter of film, preferably at an RH lower than 50%, more preferably lower than 30%.

In one embodiment, step iii) is carried out.

In another embodiment, step iii) is not carried out.

The next step of the process, step iv), is crosslinking the film of step ii) (when the drying step iii) is not carried out) or the film of step iii) (when the drying step iii) is carried out) by reaction with a divalent cation.

The divalent cation is as previously defined, preferably Ca²⁺.

The crosslinking involves the formation of ionic interactions between the positive charges of the calcium ions and the negatively charged carboxylate anion groups in the alginate structure. The G monomers in alginate are found in 1C4-conformation, making the glycosidic linkage diaxial. This will result in a near perpendicular position of the rings relative to the chain axis and therefore some cavities between the aligned chains may form and may bind then to calcium ions, for example. This leads to the formation of junctions in a gel network following the named "egg-box model". The G blocks are the ones giving the gel property to the alginate, M-blocks and MG-blocks do not bind strongly to calcium.

The crosslinking may be carried out by contacting the film of step ii) (when the drying step iii) is not carried out) or the film of step iii) (when the drying step iii) is carried out) with a solution of the divalent cation, preferably Ca²⁺.

The source of the divalent cation is as previously defined. Preferably, the source of divalent cation is CaCl₂.

The divalent cation is provided in a solution, preferably an aqueous solution, more preferably an aqueous solution of CaCl₂.

The term aqueous solution refers to a solution comprising water, preferably at least 80% by weight of water with respect to the total weight of the solution, more preferably at least 85 wt%, more preferably at least 90 wt%.

In a particular embodiment, the concentration of the divalent cation in the aqueous solution is from 0.1 to 3M, from 0.5 to 3 M, preferably from 0.5 to 2 M, more preferably from 0.5 to 1.5 M, still more preferably from 0.8 to 1.2 M.

More preferably, when the optional step iii) of drying is not carried out, the cross-linking of step iv) is performed by adding an aqueous solution of the divalent cation, preferably Ca²⁺, more preferably using CaCl₂ as the source of Ca²⁺, wherein the concentration of the divalent cation is from 0.1 to 3M, from 0.1 to 2 M, preferably from 0.1 to 1.5 M, more preferably from 0.1 to 1.0 M, still more preferably from 0.2 to 0.7 M.

In a preferred embodiment, when the optional step iii) of drying is carried out, the cross-linking of step iv) is performed by adding an aqueous solution of the divalent cation preferably Ca²⁺, more preferably using CaCl₂ as the source of Ca²⁺, which further comprises glycerol. Preferably, the concentration of glycerol in said aqueous solution is from 1 to 10 mL of glycerol per 100 mL of aqueous solution, more preferably from 1 to 5 mL of glycerol per 100 mL of aqueous solution, still more preferably from 2 to 4 mL of glycerol per 100 mL of aqueous solution. Preferably, concentration of the divalent cation in the aqueous solution is from 0.1 to 3M, from 0.5 to 3 M, preferably from 0.5 to 2 M, more preferably from 0.5 to 1.5 M, still more preferably from 0.8 to 1.2 M.

In a particular embodiment, the aqueous solution comprising the divalent cation further comprises ethanol, preferably at a concentration of 10 to 50 vol% with respect to the total volume of the aqueous solution, more preferably form 20 to 40 vol%, still more preferably from 25 to 35 vol%.

In a particular embodiment, the divalent cation is provided in an aqueous solution, more preferably an aqueous solution of CaCl₂, comprising glycerol and ethanol.

In step iv), the contacting of the film with the solution comprising the divalent cation may be carried out by applying (e.g. by pouring or by spraying) the aqueous solution comprising the divalent cation to the film obtained in step ii) (when the drying step iii) is not carried out) or the film obtained in step iii) (when the drying step iii) is carried out).

In a particular embodiment, when the optional step iii) of drying is not carried out, from 0.5 to 10 mL of solution comprising the divalent cation is applied per each 100 g of composition applied in step ii), preferably from 1 to 7 mL, more preferably from 2 to 5 mL.

In a particular embodiment, when the optional step iii) of drying is carried out, from 50 to 100 mL of solution comprising the divalent cation is applied per each 4 g of dry film obtained in step iii), preferably from 2 to 20 seconds, more preferably from 5 to 10 seconds.

Optionally, after the contacting of the film with the solution comprising the divalent cation, the film may be rinsed with water.

The next step of the process, step v) is the drying of the crosslinked film. This step may be carried out by subjecting the film to a temperature of 35 to 50 °C, preferably 35 to 45 °C, more preferably 38 to 42 °C, preferably from 10 minutes to 12 hours, preferably at an RH lower than 50%, more preferably lower than 30% preferably applying air flow from 1000 to 10000 m³/h per square meter of film.

The drying step v) removes water present in the film after step iv). Thus, the drying means that the water content of the film after step v) is less than the water content of the film before said drying step.

The films of the invention may also contain water. The water present in the films of the invention corresponds to adsorbed water from the humidity in the environment where the films are stored. Usually, the water content of the films of the invention immediately after they have been manufactured is less than 5 wt%. Usually, the water content of the film gradually increases upon storage. The amount of water in the films of the invention is typically up to 50 wt% with respect to the total weight of the film, preferably up to 40 wt%, more preferably up to 30 wt%. Preferably, the water content in the films of the invention is from 10 to 50 wt% with respect to the total weight of the film, preferably from 10 to 40 wt%, more preferably from 10 to 30 wt%, still more preferably from 20 to 30 wt%. The water content of the film depends on the relative humidity (RH) of the environment where the film is stored. The water content of the film may be determined by weighting the film before and after a drying step of at least 2 hours, preferably 6 hours at a temperature between 45 and 65°C, preferably 55°C. The difference in weight of the film before and after the drying step is attributed to water.

The fourth aspect relates to a film obtainable by the process according to the third aspect, which has been described above.

### Uses of the films of the invention

The fifth aspect relates to the use of the film according to the first aspect or the film according to the fourth aspect as a packaging.

Preferably, the packaging is for a product selected from the group consisting of food products, beverage products, electronic goods, cosmetic products, pharmaceutical products, and industrial products.

Examples of food products are pasta, nuts, lentils, fruit, cheese, chocolate, candies.

In particular, the films of the invention can be used in packaging as a window for fresh product packaging (such as fruits, bread, etc.), wrapping for greasy products such as cheese or used as a coating for fresh fruit such as bananas.

The films of the invention can be used as such, i.e. as a standalone films, for wrapping any desired product, or can be used as a layer or coating on a substrate, such as a paper substrate.'

An advantage of the films of the invention is that they can be sealed. Thus, the films of the invention can also be used as a sealed packaging.

The following examples represent specific embodiments of the present invention. They do not intend to limit in any way the scope of the invention defined in the present description.

### EXAMPLES

### Process for the preparation of aqueous precursor compositions

A water based solution of seaweed biopolymer mix was prepared comprising alginate and optionally 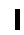 -carrageenan and κ-carrageenan (all from Algaia). This solution also comprised plasticizer (glycerol and/or triacetin, from Sigma Aldrich), optionally carboxymethyl cellulose (CMC) and microcrystalline cellulose (MCC) (both from Sigma Aldrich). When present, cellulose derivatives were previously dispersed with an ultra turrax during minimum 5 minutes at around 900 rpm before being added to the final solution. To fully homogenize the final solution it was heated to 40 °C during 15 minutes using a magnetic stirrer to mix. The final solutions were degassed in a vacuum chamber until they were free of gas bubbles.

The following compositions were prepared. References 1-9 are comparative examples, Example 10 is according to the invention. In the table below the amounts are expressed as wt% with respect to the total weight of the composition.

| **Sample** | **Exact composition** |
|---|---|
| Reference 1 | 2 wt% alginate, 2.5 wt% plasticizer (where 5 wt% is triacetin and 95 wt% is glycerol), and water up to 100 wt% |
| Reference 2 | 2 wt% alginate, 2.5 wt% plasticizer (where 5 wt% is triacetin and 95 wt% is glycerol), 0.4 wt% microcrystalline cellulose, and water up to 100 wt% |
| Reference 3 | 2 wt% seaweed extracts (from which 80 wt% alginate, 5 wt% k-carrageenan and 15 wt% i-carrageenan), 2.5 wt% plasticizer (where 5 wt% is triacetin and 95 wt% is glycerol), and water up to 100 wt% |
| Reference 4 | 5 wt% seaweed extracts (from which 80 wt% alginate, 5 wt% k-carrageenan and 15 wt% i-carrageenan), 2.5 wt% plasticizer (where 5 wt% is triacetin and 95 wt% is glycerol), 0.2 wt% microcrystalline cellulose, 0.2 wt% carboxymethyl cellulose, and water up to 100 wt% |
| Reference 5 | 1 wt% seaweed extracts (from which 80 wt% alginate, 5 wt% k-carrageenan and 15 wt% i-carrageenan), 2.5 wt% plasticizer (where 5 wt% is triacetin and 95 wt% is glycerol), 0.2 wt% microcrystalline cellulose, 0.2 wt% carboxymethyl cellulose, and water up to 100 wt% |
| Reference 6 | 2 wt% seaweed extracts (from which 80 wt% alginate, 5 wt% k-carrageenan and 15 wt% i-carrageenan), 2.5 wt% plasticizer (where 5 wt% is triacetin and 95 wt% is glycerol), 5 wt% microcrystalline cellulose, 0.2 wt% carboxymethyl cellulose, and water up to 100 wt% |
| Reference 7 | 2 wt% seaweed extracts (from which 80 wt% alginate, 5 wt% k-carrageenan and 15 wt% i-carrageenan), 2.5 wt% plasticizer (where 5 wt% is triacetin and 95 wt% is glycerol), 0.05 wt% microcrystalline cellulose, 0.2 wt% carboxymethyl cellulose, and water up to 100 wt% |
| Reference 8 | 2 wt% seaweed extracts (from which 80 wt% alginate, 5 wt% k-carrageenan and 15 wt% i-carrageenan), 5 wt% plasticizer (where 5 wt% is triacetin and 95 wt% is glycerol), 0.2 wt% microcrystalline cellulose, 0.2 wt% carboxymethyl cellulose, and water up to 100 wt% |
| Reference 9 | 2 wt% seaweed extracts (from which 80 wt% alginate, 5 wt% k-carrageenan and 15 wt% i-carrageenan), 0.05 wt% plasticizer (where 5 wt% is triacetin and 95 wt% is glycerol), 0.2 wt% microcrystalline cellulose, 0.2 wt% carboxymethyl cellulose, and water up to 100 wt% |
| Example 10 | 2 wt% seaweed extracts (from which 80 wt% alginate, 5 wt% k-carrageenan and 15 wt% i-carrageenan), 2.5 wt% plasticizer (where 5 wt% is triacetin and 95 wt% is glycerol), 0.2 wt% microcrystalline cellulose, 0.2 wt% carboxymethyl cellulose, and water up to 100 wt% |

Films were prepared from the compositions of References 1-9 and Example 10 by using the following fabrication methodologies:
- Casting: a volume of 120 g of solution (References 1-10 or Example 11) was poured into large petri squares (surface area of 600.25 cm²). Samples were dried in an oven at 40 °C until completely dry. Samples were crosslinked with a solution of 1M CaCl₂ dihydrate, containing 30% EtOH and 3 mL glycerol/100 mL solution. This was done by pouring a volume of approximately 100 mL to the dry film, leaving it for 15 s, pouring out the solution and then rinsing with water the film and leaving the film to dry.
- Coating: A volume of 300 mL was poured onto a surface of 1600 cm² and spread evenly with a bar coater. The casted solution was crosslinked using a spray disperser, using a solution of 0.5 M CaCal₂ dihydrate in water. The gel-like film was left to dry at room temperature.

### Results

The aqueous compositions of References 1-3 and Example 10 yielded films.

The aqueous composition of Reference 4 was too viscous to be casted. Thus, it was discarded.

The aqueous composition of Reference 5 was too fluid to be casted, yielded weak and sticky films. Thus, it was discarded.

The aqueous composition of Reference 6 was too viscous to cast and very difficult to homogenize. Thus, it was discarded.

The aqueous composition of Reference 7 yielded stick and weak films. Thus, it was discarded.

The aqueous composition of Reference 8 yielded very sticky and weak films. Thus, it was discarded.

The aqueous composition of Reference 9 very brittle films. Thus, it was discarded.

The film of Example 10 had the following composition: 22.7 wt% alginate, 1.4 wt% k-carrageenan, 4.2 wt% i-carrageenan, 1.8 wt% triacetin, 33.6 wt% is glycerol, 2.9 wt% microcrystalline cellulose, and 2.9 wt% carboxymethyl cellulose, 1.2 % Ca²⁺, 29.5% H₂O. The thickness of the films was measured using a MICROMETRO 4000 DIGITAL from Baxlo. The thickness of the film of Example 10 was 90 µm ± 20 µm. The water content of the film may be determined by weighting the film before and after a drying step for 4 hours at a temperature of 55°C. The difference in weight of the film before and after the drying step is attributed to water. The weight percentages in dry film composition were calculated by taking the weight of each component in the liquid precursor composition and dividing it by the sum of the weight of all other components excluding water. The final film quantitative composition is obtained by adjusting the weight percentages calculated for the dry film to the water content.

### Mechanical properties

The mechanical properties of the films obtained from the aqueous compositions of References 1-3 and Example 10 were determined. Mechanical properties were analyzed using a universal testing machine (Labthink, XLW (PC) Auto Tensile Tester). Samples were conditioned at 50% RH and at room temperature (RT) for at least 12 hours before performing measurements. Samples were cut into rectangular shapes of 100 mm x 15 mm thickness around 60-150 microns and a minimum of 6 samples were used, following ASTM X. Tensile strength, elongation at break and young modulus were analyzed.

### Results

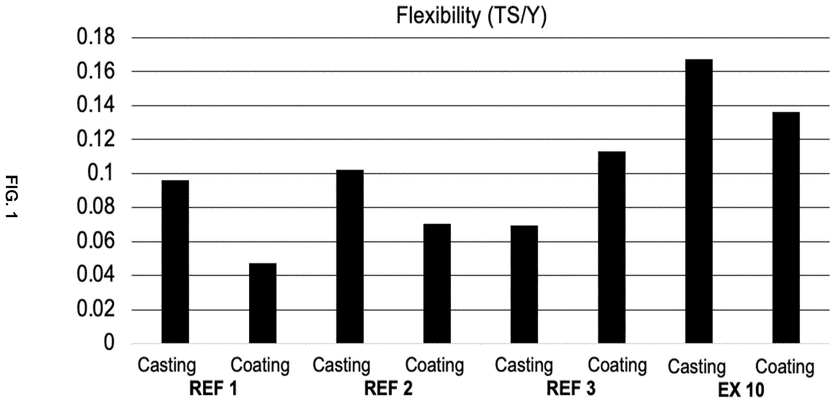

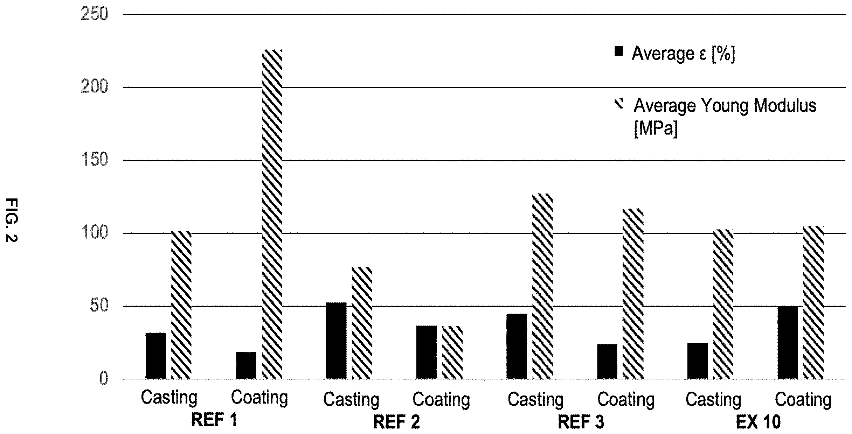

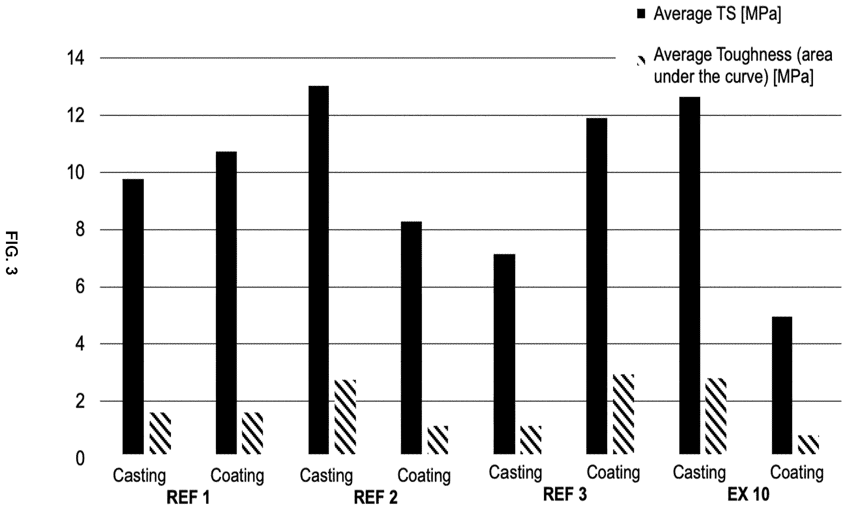

The results are shown in Figures 1-3. Figure 1 shows results of flexibility (ratio between Tensile strength and Young modulus as previously defined). Reference 1, 2 and 3 have lower flexibility compared to example 10 when fabricated using both casting and coating methodologies. Figure 2-3 show the young modulus, elongation at break, tensile strength and resilience, calculated as the area underlying the stress strain curve. It can be seen for all samples that the mechanical properties change significantly when changing the fabrication method, however sample 10 always shows the best result in terms of flexibility. Furthermore, comparing the results obtained from References 1, 2 with the ones obtained from Reference 3 and Example 10 we observe an unexpected increase in flexibility when MCC is added to the formulation containing CMC and carrageenan. In summary, the film of example 11 results in a tough material that maintains low young modulus and high elongation at break (high flexibility and ductile/elastomeric behavior).

### Barrier Properties

### Water Vapor Transmission Rate (WVTR)

For WVTR measurement the equipment used was a WVTR EQ188/ITN Mocon Permatran. Measurements were carried out at a temperature of 23±0.5 C. Samples were conditioned in the measuring cell for 2 hours and before that they were conditioned for over 48h in a desiccator, following ASTM F1249-20. Values obtained for two samples of Example 11 were (1 mmHg is 133.322 Pa) 92.40±0.90 g/m²*day and the permeance to water vapor was 8.77±0.0223 g/m²*day*mmHg).

### Oxygen Transmission Rate

Oxygen transmission rate was measured using a Mocon Ox-tran 2/21 MH following the ASTM F1927-20 ISO standard. Samples were conditioned during 48h in a dessicator. The exposed surface was 50 cm2 The relative humidity was 50% and the temperature 23±0.5C. Mean values for 2 samples of Example 11 were 11.5 and 38.0 cm³/m²/day. Measurements performed by another partner in the same range (4 samples): 43.23±14.00 cm³/m² day. The variation in results are due to non-uniformity of samples provided or batch to batch variation in lab scale processing.

### Grease Barrier (results for paper coating)

Turpentine test adapting Tappi T 454 OM-15 protocol was used to determine the grease barrier of the film obtained from the formulation of Example 11 and comparing it to bare paper.

The staining solution was prepared by mixing 100 mL of turpentine oil with 1,0 g of Oil Red O dye and 5.0 g of anhydrous CaCl₂ in a flask. After well shaked, the solution was filtered with a Buchner vacuum filtration. The solution was then stored in an airtight bottle. A small quantity of CaCl₂ beads was added in order to prevent the presence of moisture in the solution.

The following samples were prepared:
- Coated-crosslinked: Samples were prepared by casting the Example 11 solution on a paper substrate and distributed homogeneously with a ruler. The solution was left to dry and thereafter a solution of calcium chloride dihydrate 0.5 M was sprayed over in order to crosslink the film.
- Non-coated: Bare paper

Samples were prepared (50 mm x 50 mm) and conditions at RT and at 50% RH for at least 12h. Samples were positioned in the paper for testing, 5 g of ottawa grade sand were disposed on top of the sample and 1.1 mL of the staining solution was added onto the sand covered sample. Samples were slid every 15 seconds for 1 minute and then every minute for minutes and then every 5 minutes for 30 minutes.

### Results

The results are provided in the table below:

| Sample | Turpine test duration (s) | Grease Barrier Capacity |
|---|---|---|
| Coated | 1800+ | Good |
| Non coated | 15 | Bad |

Coating using Example 11 provides an effective barrier to fat.

### Food preservation: oxidation experiment

Film samples were prepared following the protocol used for Example 11 as previously described and used to package cherry tomatoes and blueberries. The tomatoes and the blueberry were wrapped in the film and the film edges were twisted together and blocked using clips preventing gas leakage. For the tomato experiment, the control used was without any packaging and in the case of the blueberries the control were blueberries packed in a PP film.

Results: Samples wrapped in seaweed based film in the case of the tomato, have not lost the color due to oxidation, and in the case of the blueberries, those inside the seaweed film dry out and those inside a PP film have started to rot.

### Food preservation: Food spoilage prevention

Samples of cheese (gruyere) were wrapped in different types of packaging: plastic stretch film, crosslinked film obtained from the formulation of Example 11, and no packaging. Samples were stored in the fridge for 14 days, and were monitored every 2 days.

Results: On day 14, we can observe that from visual inspection there is mold presence in the cheese sample wrapped in plastic and in the cheese sample which was left unpackaged. On day 14, in the cheese samples wrapped in the film of the invention no mold was detected.

## Claims

1. Film comprising:
- from 26 to 60 wt% of a mixture of alginate and carrageenan in a weight ratio of from 2:1 to 9:1,
- glycerol in a weight ratio to the alginate and carrageenan mixture from 1:2 to 2:1,
- microcrystalline cellulose in a weight ratio to the alginate and carrageenan mixture from 1:20 to 1:1,
- carboxymethyl cellulose in a weight ratio to the alginate and carrageenan mixture from 1:20 to 1:1,
- a divalent cation in a weight ratio to the alginate and carrageenan mixture from 1:200 to 1:8, and
- water,
wherein the weight ratio of carboxymethyl cellulose to microcrystalline cellulose is from 3:4 to 4:3, and
wherein the weight percentage is based on the total weight of the components of the film except water.

2. Film according to claim 1, which further comprises triacetin, wherein the weight ratio of triacetin to the alginate and carrageenan mixture is from 1:200 to 1:8.

3. Film according to any one of the preceding claims, wherein the carrageenan is selected from the group consisting of κ-carrageenan, 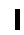 -carrageenan and mixtures thereof; preferably a mixture of κ-carrageenan and 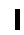 -carrageenan; more preferably a mixture of κ-carrageenan and 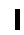 -carrageenan in a weight ratio from 1:1 to 1:5.

4. Film according to any one of the preceding claims, wherein the divalent cation is Ca²⁺.

5. Film according to any one of the preceding claims, which comprises:
- from 30 to 56 wt% alginate,
- from 1.5 to 3 wt% κ-carrageenan and from 4 to 9 wt% 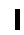 -carrageenan,
- from 20 to 60 wt% glycerol,
- from 1.5 to 25 wt% microcrystalline cellulose,
- from 1.5 to 25 wt% carboxymethyl cellulose,
- from 0.5 to 3 wt% Ca²⁺, and
- from1 to 4 wt% triacetin,
wherein the weight percentages are based on the total weight of the film.

6. Composition comprising:
- from 1.2 to 4.8 wt% of a mixture of alginate and carrageenan in a weight ratio of from 2:1 to 9:1,
- glycerol in a weight ratio to the alginate and carrageenan mixture from 1:2 to 2:1,
- microcrystalline cellulose in a weight ratio to the alginate and carrageenan mixture from 1:20 to 1:1,
- carboxymethyl cellulose in a weight ratio to the alginate and carrageenan mixture from 1:20 to 1:1, and
- water,
wherein the weight ratio of carboxymethyl cellulose to microcrystalline cellulose is from 3:4 to 4:3,
and
wherein the weight percentage is based on the total weight of the composition.

7. Composition according to claim 6, which further comprises triacetin, wherein the weight ratio of triacetin to the alginate and carrageenan mixture is from 1:200 to 1:8.

8. Composition according to any one of claims 6 or 7 where carrageenan is selected from the group consisting of κ-carrageenan, 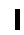 -carrageenan and mixtures thereof; preferably a mixture of κ-carrageenan and 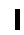 -carrageenan; more preferably a mixture of κ-carrageenan and 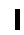 -carrageenan in a weight ratio from 1:1 to 1:5.

9. Composition according to any one claims 6 to 8, which comprises:
- from 1.5 to 2.5 wt% alginate,
- from 0.07 to 0.15 wt% κ-carrageenan and from 0.2 to 0.4 wt% 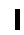 -carrageenan,
- from 1 to 4 wt% glycerol,
- from 0.1 to 1 wt% microcrystalline cellulose,
- from 0.1 to 1 wt% carboxymethyl cellulose,
- from 0.05 to 0.5 wt% triacetin, and
- water
wherein the weight percentages are based on the total weight of the composition.

10. Composition according to any one of claims 6 to 9, wherein water is present in an amount of at least 90 wt% with respect to the total weight of the composition.

11. Process for the manufacture of a film as defined in any one of claims 1 to 5, which comprises the following steps:
i) preparing a composition as defined in any one of claims 6 to 10;
ii) applying the composition of step i) to a surface at a ratio of from 10 to 30 g of composition per 100 cm² of surface;
iii) optionally drying the film obtained in step ii);
iv) crosslinking the film of step ii) or the film of step iii) by reaction with a divalent cation, preferably Ca²⁺; and
v) drying.

12. Process according to claim 11, wherein step iv) is performed by adding an aqueous solution of the divalent cation which further comprises glycerol.

13. Use of the film according to any one of claims 1 to 5 as a packaging.

14. Use according to claim 13, wherein the packaging is for a product selected from the group consisting of food products, beverage products, electronic goods, cosmetic products, pharmaceutical products, and industrial products.

## Patentansprüche

1. Folie, umfassend:
- von 26 bis 60 Gew.-% eines Gemisches aus Alginat und Carrageen in einem Gewichtsverhältnis von 2:1 bis 9:1,
- Glycerin in einem Gewichtsverhältnis zu dem Gemisch aus Alginat und Carrageen von 1:2 bis 2:1,
- mikrokristalline Cellulose in einem Gewichtsverhältnis zu dem Gemisch aus Alginat und Carrageen von 1:20 bis 1:1,
- Carboxymethylcellulose in einem Gewichtsverhältnis zu dem Gemisch aus Alginat und Carrageen von 1:20 bis 1:1,
- ein zweiwertiges Kation in einem Gewichtsverhältnis zu dem Gemisch aus Alginat und Carrageen von 1:200 bis 1:8, und
- Wasser,
wobei das Gewichtsverhältnis von Carboxymethylcellulose zu mikrokristalliner Cellulose von 3:4 bis 4:3 beträgt, und
wobei sich die Gewichtsprozente auf das Gesamtgewicht der Bestandteile der Folie mit Ausnahme des Wassers beziehen.

2. Folie nach Anspruch 1, die weiter Triacetin umfasst, wobei das Gewichtsverhältnis von Triacetin zu dem Gemisch aus Alginat und Carrageen von 1:200 bis 1:8 beträgt.

3. Folie nach einem der vorhergehenden Ansprüche, wobei das Carrageen ausgewählt ist aus der Gruppe, bestehend aus κ-Carrageen, ι-Carrageen und Gemischen davon; vorzugsweise einem Gemisch aus κ-Carrageen und ι-Carrageen; stärker bevorzugt einem Gemisch aus κ-Carrageen und ι-Carrageen in einem Gewichtsverhältnis von 1:1 bis 1:5.

4. Folie nach einem der vorhergehenden Ansprüche, wobei das zweiwertige Kation Ca²⁺ ist.

5. Folie nach einem der vorhergehenden Ansprüche, umfassend:
- von 30 bis 56 Gew.-% Alginat,
- von 1,5 bis 3 Gew.-% κ-Carrageen und von 4 bis 9 Gew.-% ι-Carrageen,
- von 20 bis 60 Gew.-% Glycerin,
- von 1,5 bis 25 Gew.-% mikrokristalline Cellulose,
- von 1,5 bis 25 Gew.-% Carboxymethylcellulose,
- von 0,5 bis 3 Gew.-% Ca²⁺, und
- von 1 bis 4 Gew.-% Triacetin,
wobei sich die Gewichtsprozente auf das Gesamtgewicht der Folie beziehen.

6. Zusammensetzung, umfassend:
- von 1,2 bis 4,8 Gew.-% eines Gemisches aus Alginat und Carrageen in einem Gewichtsverhältnis von 2:1 bis 9:1,
- Glycerin in einem Gewichtsverhältnis zu dem Gemisch aus Alginat und Carrageen von 1:2 bis 2:1,
- mikrokristalline Cellulose in einem Gewichtsverhältnis zu dem Gemisch aus Alginat und Carrageen von 1:20 bis 1:1,
- Carboxymethylcellulose in einem Gewichtsverhältnis zu dem Gemisch aus Alginat und Carrageen von 1:20 bis 1:1, und
- Wasser,
wobei das Gewichtsverhältnis von Carboxymethylcellulose zu mikrokristalliner Cellulose von 3:4 bis 4:3 beträgt,
und
wobei sich die Gewichtsprozente auf das Gesamtgewicht der Zusammensetzung beziehen.

7. Zusammensetzung nach Anspruch 6, die weiter Triacetin umfasst, wobei das Gewichtsverhältnis von Triacetin zu dem Gemisch aus Alginat und Carrageen von 1:200 bis 1:8 beträgt.

8. Zusammensetzung nach einem der Ansprüche 6 oder 7, wobei das Carrageen ausgewählt ist aus der Gruppe, bestehend aus κ-Carrageen, ι-Carrageen und Gemischen davon; vorzugsweise einem Gemisch aus κ-Carrageen und ι-Carrageen; stärker bevorzugt einem Gemisch aus κ-Carrageen und ι-Carrageen in einem Gewichtsverhältnis von 1:1 bis 1:5.

9. Zusammensetzung nach einem der Ansprüche 6 bis 8, umfassend:
- von 1,5 bis 2,5 Gew.-% Alginat,
- von 0,07 bis 0,15 Gew.-% κ-Carrageen und 0,2 bis 0,4 Gew.-% ι-Carrageen,
- von 1 bis 4 Gew.-% Glycerin,
- von 0,1 bis 1 Gew.-% mikrokristalline Cellulose,
- von 0,1 bis 1 Gew.-% Carboxymethylcellulose,
- von 0,05 bis 0,5 Gew.-% Triacetin, und
- Wasser,
wobei sich die Gewichtsprozente auf das Gesamtgewicht der Zusammensetzung beziehen.

10. Zusammensetzung nach einem der Ansprüche 6 bis 9, wobei Wasser in einer Menge von mindestens 90 Gew.-%, bezogen auf das Gesamtgewicht der Zusammensetzung, vorhanden ist.

11. Verfahren zur Herstellung einer Folie nach einem der Ansprüche 1 bis 5, welches die folgenden Schritte umfasst:
i) Herstellen einer Zusammensetzung, wie in einem der Ansprüche 6 bis 10 definiert;
ii) Aufbringen der Zusammensetzung aus Schritt i) auf eine Oberfläche in einer Menge von 10 bis 30 g Zusammensetzung pro 100 cm² Oberfläche;
iii) gegebenenfalls Trocknen der in Schritt ii) erhaltenen Folie;
iv) Vernetzen der Folie aus Schritt ii) oder der Folie aus Schritt iii) durch Reaktion mit einem zweiwertigen Kation, vorzugsweise Ca²⁺; und
v) Trocknen.

12. Verfahren nach Anspruch 11, wobei Schritt iv) durch Zugabe einer wässrigen Lösung des zweiwertigen Kations durchgeführt wird, die weiter Glycerin umfasst.

13. Verwendung der Folie nach einem der Ansprüche 1 bis 5 als eine Verpackung.

14. Verwendung nach Anspruch 13, wobei die Verpackung für ein Produkt ausgewählt aus der Gruppe bestehend aus Lebensmitteln, Getränken, elektronischen Waren, Kosmetikprodukten, pharmazeutischen Produkten und Industrieprodukten, bestimmt ist.

## Revendications

1. Film comprenant :
- de 26 à 60 % en poids d'un mélange d'alginate et de carraghénane dans un rapport pondéral de 2:1 à 9:1,
- du glycérol dans un rapport pondéral au mélange d'alginate et de carraghénane de 1:2 à 2:1,
- de la cellulose microcristalline dans un rapport pondéral au mélange d'alginate et de carraghénane de 1:20 à 1:1,
- de la carboxyméthylcellulose dans un rapport pondéral au mélange d'alginate et de carraghénane de 1:20 à 1:1,
- un cation divalent dans un rapport pondéral au mélange d'alginate et de carraghénane de 1:200 à 1:8, et
- de l'eau,
dans lequel le rapport pondéral de la carboxyméthylcellulose à la cellulose microcristalline est de 3:4 à 4:3, et
dans lequel le pourcentage en poids est basé sur le poids total des composants du film à l'exception de l'eau.

2. Film selon la revendication 1, qui comprend en outre de la triacétine, dans lequel le rapport pondéral de la triacétine au mélange d'alginate et de carraghénane est de 1:200 à 1:8.

3. Film selon l'une quelconque des revendications précédentes, dans lequel le carraghénane est choisi dans le groupe consistant en K-carraghénane, I-carraghénane et leurs mélanges ; de préférence un mélange de K-carraghénane et I-carraghénane ; de manière davantage préférée un mélange de K-carraghénane et I-carraghénane dans un rapport pondéral de 1:1 à 1:5.

4. Film selon l'une quelconque des revendications précédentes, dans lequel le cation divalent est Ca²⁺.

5. Film selon l'une quelconque des revendications précédentes, qui comprend :
- de 30 à 56 % en poids d'alginate,
- de 1,5 à 3 % en poids de K-carraghénane et de 4 à 9 % en poids d'I-carraghénane,
- de 20 à 60 % en poids de glycérol,
- de 1,5 à 25 % en poids de cellulose microcristalline,
- de 1,5 à 25 % en poids de carboxyméthylcellulose,
- de 0,5 à 3 % en poids de Ca²⁺, et
- de 1 à 4 % en poids de triacétine,
dans lequel les pourcentages en poids sont basés sur le poids total du film.

6. Composition comprenant :
- de 1,2 à 4,8 % en poids d'un mélange d'alginate et de carraghénane dans un rapport pondéral de 2:1 à 9:1,
- du glycérol dans un rapport pondéral au mélange d'alginate et de carraghénane de 1:2 à 2:1,
- de la cellulose microcristalline dans un rapport pondéral au mélange d'alginate et de carraghénane de 1:20 à 1:1,
- la carboxyméthylcellulose dans un rapport pondéral au mélange d'alginate et de carraghénane de 1:20 à 1:1, et
- de l'eau,
dans laquelle le rapport pondéral de la carboxyméthylcellulose à la cellulose microcristalline est de 3:4 à 4:3,
et
dans laquelle le pourcentage en poids est basé sur le poids total de la composition.

7. Composition selon la revendication 6, qui comprend en outre de la triacétine, dans laquelle le rapport pondéral de la triacétine au mélange d'alginate et de carraghénane est de 1:200 à 1:8.

8. Composition selon l'une quelconque des revendications 6 ou 7, dans laquelle le carraghénane est choisi dans le groupe consistant en K-carraghénane, I-carraghénane et des mélanges de ceux-ci ; de préférence un mélange de K-carraghénane et I-carraghénane ; de manière davantage préférée un mélange de K-carraghénane et I-carraghénane dans un rapport pondéral de 1:1 à 1:5.

9. Composition selon l'une quelconque des revendications 6 à 8, qui comprend :
- de 1,5 à 2,5 % en poids d'alginate,
- de 0,07 à 0,15 % en poids de K-carraghénane et de 0,2 à 0,4 % en poids d'I-carraghénane,
- de 1 à 4 % en poids de glycérol,
- de 0,1 à 1 % en poids de cellulose microcristalline,
- de 0,1 à 1 % en poids de carboxyméthylcellulose,
- de 0,05 à 0,5 % en poids de triacétine, et
- de l'eau
dans laquelle les pourcentages en poids sont basés sur le poids total de la composition.

10. Composition selon l'une quelconque des revendications 6 à 9, dans laquelle l'eau est présente en une quantité d'au moins 90 % en poids par rapport au poids total de la composition.

11. Procédé pour la fabrication d'un film selon l'une quelconque des revendications 1 à 5, qui comprend les étapes suivantes :
i) la préparation d'une composition telle que définie dans l'une quelconque des revendications 6 à 10 ;
ii) l'application de la composition de l'étape i) sur une surface à un rapport de 10 à 30 g de composition pour 100 cm² de surface ;
iii) le séchage facultatif du film obtenu à l'étape ii) ;
iv) la réticulation du film de l'étape ii) ou du film de l'étape iii) par réaction avec un cation divalent, de préférence Ca²⁺ ; et
v) le séchage.

12. Procédé selon la revendication 11, dans lequel l'étape iv) est réalisée en ajoutant une solution aqueuse du cation divalent qui comprend en outre du glycérol.

13. Utilisation du film selon l'une quelconque des revendications 1 à 5 comme emballage.

14. Utilisation selon la revendication 13, dans laquelle l'emballage est destiné à un produit choisi dans le groupe consistant en des produits alimentaires, des produits de boissons, des biens électroniques, des produits cosmétiques, des produits pharmaceutiques et des produits industriels.
